# EUROPEAN PATENT SPECIFICATION

(11) **EP 1 523 897 B1**
(45) Date of publication and mention of the grant of the patent: **07.12.2016**
(21) Application number: 04023663.0
(22) Date of filing: 05.10.2004
(51) Int. Cl.: A23L 3/02, A23L 3/04

(54) **Apparatus for continuously cooking and cooling in water food products, in particular meat products**
Vorrichtung zum kontinuierlichen Kochen und Kühlen von Nahrungsmitteln in Wasser, insbesondere von Fleischprodukten
Installation de cuisson et de refroidissement en continu de produits alimentaires dans l'eau, notamment de produits carnés

(30) Priority: 16.10.2003 IT MI20032014
(43) Date of publication of application: 20.04.2005
(73) Proprietor: SINTECO IMPIANTI S.R.L., 20099 Sesto San Giovanni (IT)
(72) Inventor: Adam, Frank, 20048 Carate Brianza (IT)
(74) Representative: Saporiti, Emilio Luigi

(56) References cited:
- EP-A- 0 304 655
- EP-A1- 1 510 132
- DE-A1- 2 559 264
- US-A- 5 203 256
- US-A- 5 398 600
- US-A1- 2003 089 578

## Description

### BACKGROUND OF THE INVENTION

The present invention relates to an apparatus for continuously cooking and cooling in water food products, in particular meat products.

As is known, for thermally cooking and cooling food products in general and, in particular, meat products, arranged in suitable cooking molds, it is necessary to use cooking machines which must be specifically designed depending on the configuration of the molds, which latter must be in turn designed depending on the constructions of the cooking machines.

Moreover, prior cooking machines or apparatus do not allow to perform a continuous thermal processing of the product, in particular of a first in - first out type, and in this prior apparatus, the cooking process is a batch or discontinuous cooking process, which is conventionally performed in basins or trays adapted to hold therein only a comparatively small amount of product to be cooked and/or processed.

### SUMMARY OF THE INVENTION

Accordingly, the aim of the present invention is to solve the above mentioned problem, by providing an apparatus for continuously cooking and cooling in water food products in general and meat products in particular, allowing to carry out the cooking thermal process by advantageously exploiting all the different mold configurations as at present commercially available and used, while providing a very flexible operation in existing systems and structures.

Within the scope of the above mentioned aim, a main object of the present invention is to provide such an apparatus allowing to use existing cooking molds without the need of modifying the product shapes and the making standards thereof.

Another object of the present invention is to provide such an apparatus allowing to also perform a thermal process in a comparatively long time, thereby deeply processing the meat products, to provide said meat products with improved organoleptic characteristics.

Yet another object of the present invention is to provide such an apparatus which, owing to its specifically designed construction, is very reliable and safe in operation and which, moreover, is very competitive from a mere economic standpoint.

According to one aspect of the present invention, the above mentioned aim and objects, as well as yet other objects, which will become more apparent hereinafter, are achieved by an apparatus for continuously cooking and cooling, in water, food products in general and meat products in particular, characterized in that said apparatus comprises a cooking basin and a cooling basin, said basins being operatively interconnected to one another.

In said basins, driving means for continuously driving mold supporting frameworks for supporting product holding molds being provided.

Moreover, pumping and thermal processing means are additionally provided for pumping and processing a circulating fluid which is circulated according to cross flows substantially perpendicular to the driving or transfer direction of said frameworks.

### BRIEF DESCRIPTION OF THE DRAWINGS

Further characteristics and advantages of the present invention will become more apparent hereinafter from the following detailed disclosure of a number of preferred, though not exclusive, embodiments of an apparatus for continuously cooking and cooling, in water, food products in general, and meat products in particular, which is illustrated, by way of an indicative, but not limitative, example in the accompanying drawings, where:
Figure 1 is a schematic perspective view illustrating an apparatus according to the present invention, with its cooling basin arranged in cascade relationship with respect to the cooking basin thereof;
Figure 2 is a top plan view illustrating the apparatus according to the invention;
Figure 3 is a further top plan view illustrating the inventive apparatus with a cooking basin and a cooling basin arranged in an adjoining relationship;
Figure 4 is an elevation view illustrating the apparatus according to the invention with the cooking basin being arranged in an overlapping relationship with respect to the cooling basin;

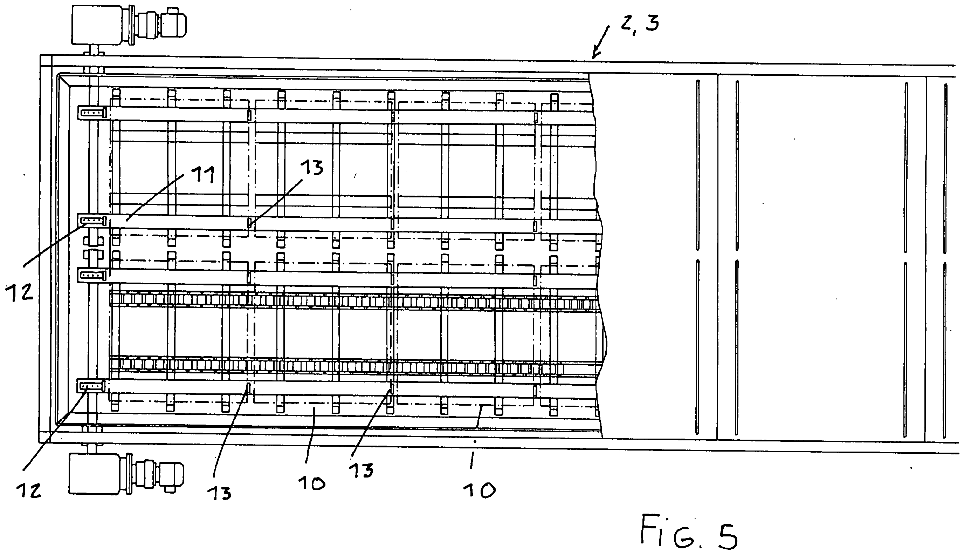

Figure 5 is a schematic top plan view illustrating a processing basin in which are clearly shown the transfer or driving means;

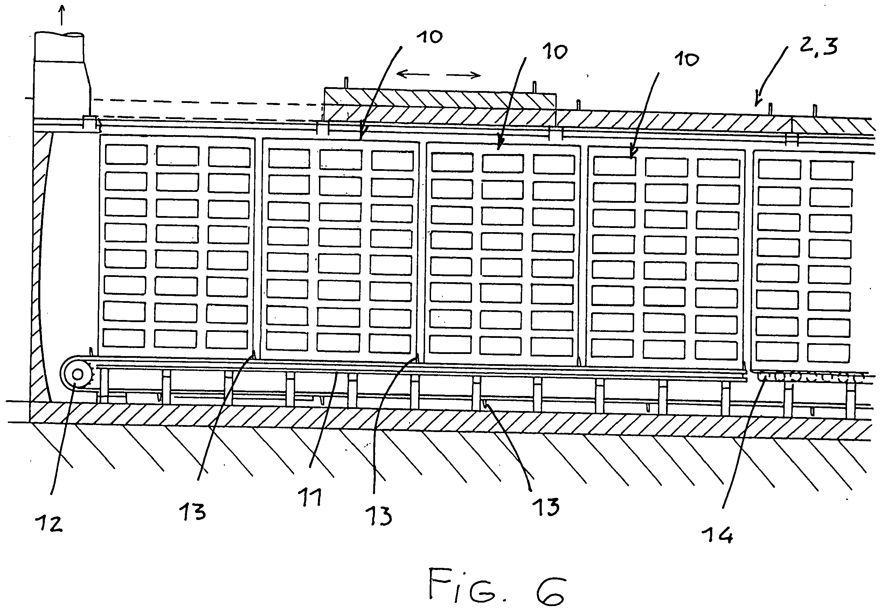

Figure 6 is a further elevation view illustrating a further processing basin; and
Figure 7 is a cross section view illustrating a further processing basin including controlling means for controlling/driving said transfer or driving means and the framework supporting means.

### DESCRIPTION OF THE PREFERRED EMBODIMENTS

With reference to the number references of the above mentioned figures, the apparatus for continuously cooking and cooling in water food products in general and meat products in particular, according to the present invention, which is generally indicated by the reference number 1, comprises a cooking basin 2 and a cooling basin 3, of elongated configuration and which are operatively interconnected to one another.

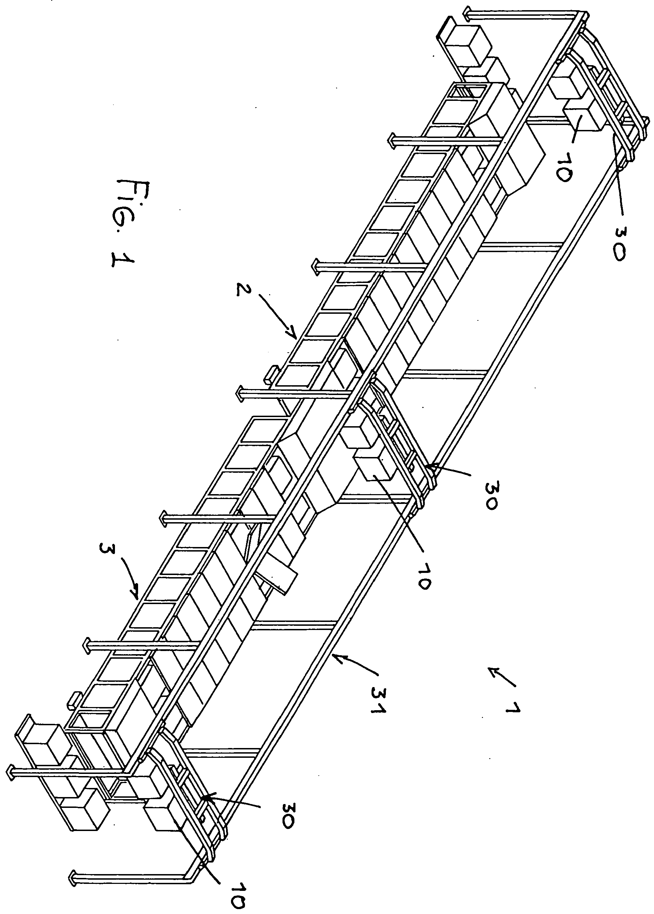

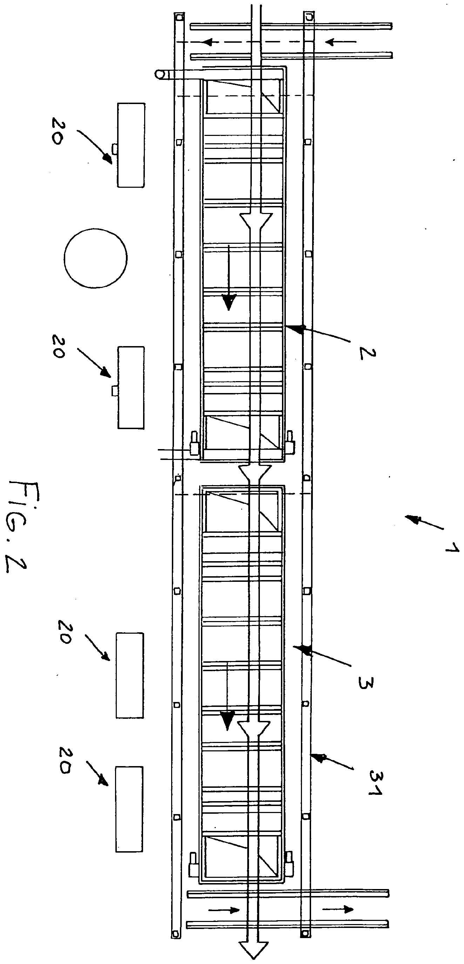

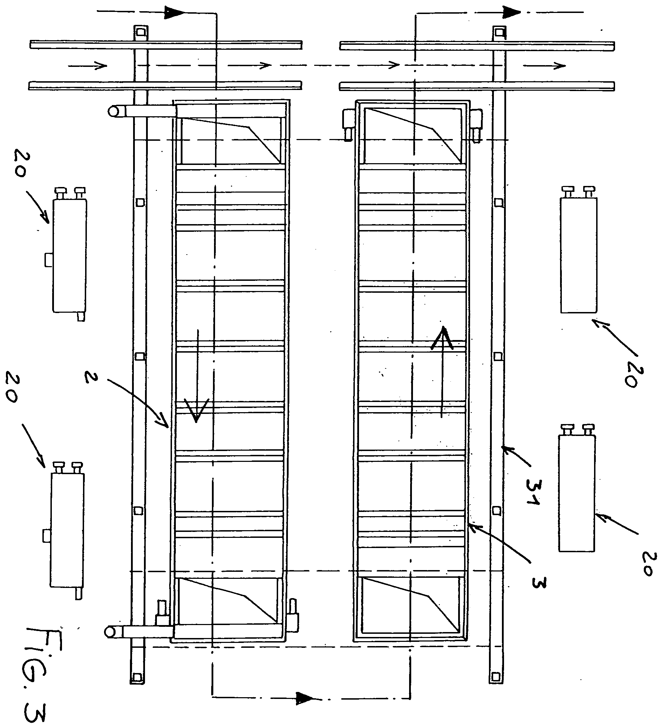

As is schematically shown in figures 1 and 2, the cooling basin is arranged in a cascade or tandem relationship with respect to the cooking basin, whereas in figure 3 is shown, by a top plan view, an embodiment of the invention in which the cooling basin, also indicated by the reference number 3, is arranged adjoining the cooking basin 2.

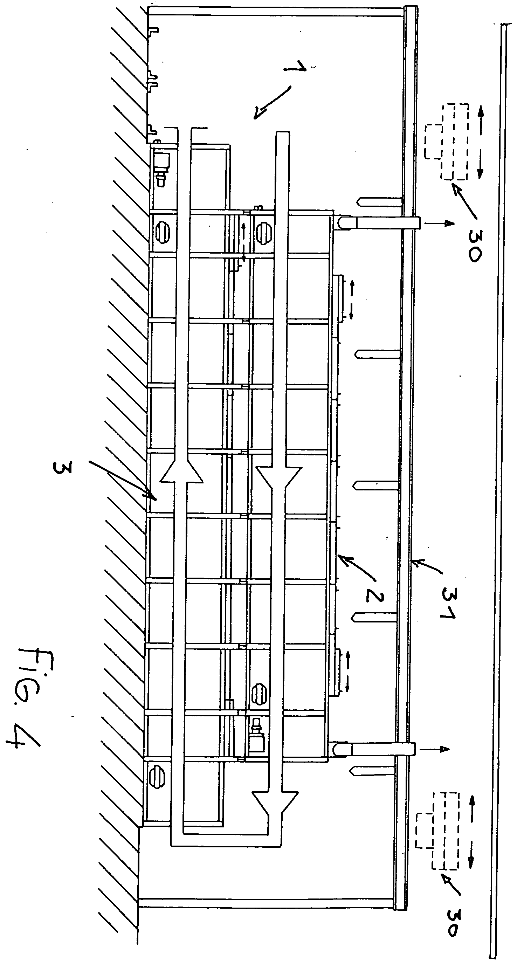

Figure 4 shows a further mutual arrangement of the processing basin, in which the cooking basin 2 is arranged in an overlapping relationship with respect to the cooling basin 3.

In this connection it should be apparent that the mutual arrangement of the cooking and cooling basins can be changed according to requirements, with the inventive feature that the basins can also be used independently from one another.

As shown in the drawings, the cooking and cooling basins allow to provide or carry out a continuous processing, owing to the provision of driving or transfer means for continuously driving or transferring supporting frameworks, generally indicated by the reference number 10 and so constructed as to be easily introduced into and withdrawn from said basins, said supporting frameworks supporting a plurality of overlapping molds.

More specifically, said transfer or driving means comprise a pair of driving chains 11 continuously entrained on pinions 12 and which, at a preset pitch, comprise pusher elements 13 engaging with said supporting frameworks 10 for driving the latter.

Moreover, between the chains 11 a roller assembly 14 is provided for supporting said frameworks, which are released from a hydrostatic pushing force provided by the thermal processing fluid circulating inside the basins.

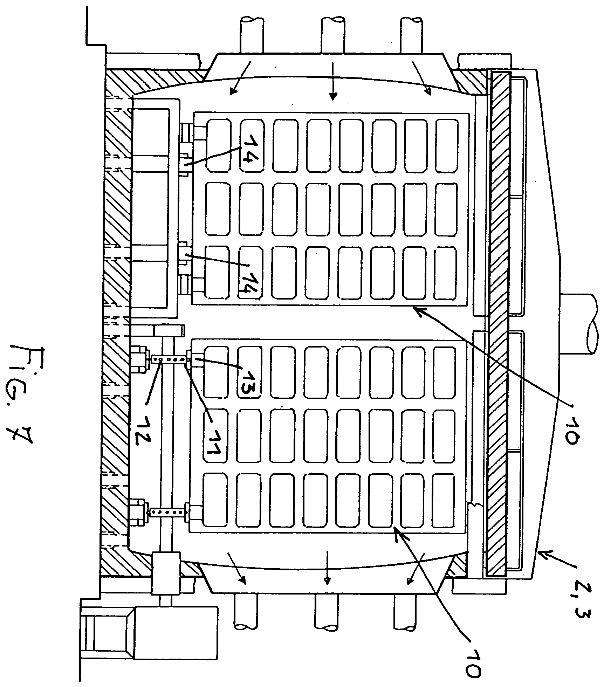

More specifically, the circulating flows, as is clearly shown in figure 7, are transversely directed with respect to the transfer or driving direction, thereby it is possible to easily control the thermal processing levels, which can be changed depending on the product being processed and, moreover, depending on the different regions of the processing basins.

Each section or basin comprises moreover one or more pumping assemblies, generally indicated by the reference number 20, provided for carrying out the thermal process and arranged on a side of the apparatus, thereby controlling the thermal cycle with a continuous water circulation.

The single-block pumping assemblies, arranged on supporting racks in order to provide an easy assembling, are coupled to each hot and cold section and allow, owing to the provision of a specifically designed adjustment system, to provide different water temperatures in the different regions of each section, thereby facilitating the cooking and cooling processes, which can require several processing stages at different or variable temperatures.

The cross water flows, in addition to being very powerful, flow through the middle portion of each mold in a constant and even manner, thereby facilitating a high thermal exchange regimen, to provide the desired cooking values for the desired time.

The comparatively large water volume which is continuously driven by the pumping system with a low Δ T allows to provide an optimum thermal exchange with the product being processed and provides a homogeneous processing, to assure a very good organoleptic and bacteriologic quality of the products.

Moreover, the cooking and cooling times can be selected depending on requirements, thereby further improving the product quality and production yield while providing very power savings.

For feeding the supporting frameworks 10 to the processing basins, a loading and unloading assembly is moreover provided which comprises a bridge crane 30, arranged at the loading and unloading end portions of both the cooking and cooling basin.

More specifically, said bridge crane loading an unloading handling assembly is arranged on a steel supporting construction, generally indicated by the reference number 31, which is in turn arranged on a side of the processing basins and on which a specifically designed portal robot is driven.

As stated, each processing section comprises a chain 11 for handling and transferring the product being processed into the processing basins through the supporting frameworks bearing with a low friction on roller guides.

Said supporting frameworks, holding the stacked processing molds, are loaded one after the other and, by the bridge crane system, pass to the loading region of the cooking section and are fed with a programmable and adjustable transport speed which can be programmed and adjusted depending on the cooking time required by the product being processed.

Upon ending the cooking operation, i.e. at the outlet of the hot section, the supporting frame is unloaded and arranged in the loading region of the cooling section, in which the product is handled by the same chain system, but with different processing times.

Upon ending the cooling operation or cycle, the supporting framework is unloaded and sent to the mold removal region.

The disclosed system allows to obtain a precise or accurate holding time, allowing to continuously process the products, according to the provided production rated, and without waiting periods and without accumulation regions as are necessary in discontinuous conventional processing apparatus or systems.

Thus, the production cycle will be held constant, and, moreover, will require a low number of operators.

In each processing basin, moreover, it is possible to arrange two or more separated tracks, on which the supporting frameworks can be driven with different speeds, thereby the processing molds can be used for a time which can be varied depending on the characteristics of the products held therein.

From the above disclosure it should be apparent that the invention fully achieved the intended aim and objects.

In particular, it should be pointed out that the invention provides an apparatus allowing to carry out a continuous process with processing means which, in addition to being very simple, are very practical and functional.

Moreover, all the constructional details can be replaced by other technically equivalent elements.

In practicing the invention, the used materials, provided that they are compatible to the intended application, as well as the contingent size and shapes can be any, depending on requirements.

## Claims

1. An apparatus (1) for continuously cooking and cooling in water meat food products removably contained in cooking molds, said apparatus comprising a cooking basin (2) and a cooling basin (3), said cooking basin (2) and cooling basin (3) being separated from one another while being operatively interconnected to one another, said basins (2, 3) including driving means (11, 12, 13, 14) for continuously transferring a plurality of frameworks supporting a plurality of said food products each removably held in a respective mold, said apparatus further comprising pumping and thermal processing assemblies (20) for pumping and thermally processing a circulating large water volume which is circulated in cross flows substantially perpendicular to said food product molds and a bridge crane (30) arranged at loading and unloading end portions of both said cooking (2) and cooling basins (3) on a steel supporting construction (31) arranged on a side of said basins (2, 3) and thereon a portal robot is driven.

2. An apparatus, according to claim 1, **characterized in that** said cooling basin (3) is arranged in a cascade relationship with respect to said cooking basin (2).

3. An apparatus, according to claim 1, **characterized in that** said cooling basin (3) is arranged in an adjoining relationship with respect to said cooking basin (2).

4. An apparatus, according to claim 1, **characterized in that** said cooking basin (2) and cooling basin (3) are arranged in a mutually overlapping relationship.

5. An apparatus, according to claim 1, **characterized in that** said driving means (11, 12, 13, 14) comprise driving chains (11) entrained in a continuous manner and including a plurality of pushing elements (13) arranged with a preset pitch from one another.

6. An apparatus, according to claim 1, **characterized in that** said apparatus further comprises roller supporting elements (14) for supporting said frameworks inside said basins (2, 3)

7. An apparatus, according to claim 1, **characterized in that** said pumping and thermally processing assemblies (20) are arranged on a side of each said basin (2, 3).

8. An apparatus, according to claim 1, **characterized in that** each said basin includes two discrete and independently driven tracks.

## Patentansprüche

1. Vorrichtung (1) zum kontinuierlichen Kochen und Kühlen in Wasser von Fleischprodukten, die entfernbar in Kochformen enthalten sind, wobei die Vorrichtung ein Kochbecken (2) und ein Kühlbecken (3) umfasst, wobei das Kochbecken (2) und das Kühlbecken (3) voneinander getrennt sind, während sie betrieblich miteinander verbunden sind, wobei die Becken (2, 3) Antriebsmittel (11, 12, 13, 14) zum kontinuierlichen Befördern einer Mehrzahl von Rahmen umfassen, die eine Mehrzahl von Nahrungsmitteln tragen, die jeweils entfernbar in einer jeweiligen Form gehalten werden, wobei die Vorrichtung des Weiteren Pump- und thermische Verarbeitungsaufbauten (20) zum Pumpen und thermischen Verarbeiten eines zirkulierenden, großen Wasservolumens, welches im Gegenstrom im Wesentlichen senkrecht zu den Nahrungsmittelformen zirkuliert wird, und einen Brückenkran (30) umfasst, welcher an Lade-und Entlade-Endabschnitten sowohl des Kochbeckens (2) als auch des Kühlbeckens (3) auf einer Stahltragekonstruktion (31) angeordnet ist, die ihrerseits auf einer Seite der Becken (2, 3) angeordnet ist und worauf ein Portalroboter angetrieben wird.

2. Vorrichtung nach Anspruch 1, **dadurch gekennzeichnet, dass** das Kühlbecken (3) in einer Kaskadenbeziehung in Bezug auf das Kochbecken (2) angeordnet ist.

3. Vorrichtung nach Anspruch 1, **dadurch gekennzeichnet, dass** das Kühlbecken (3) in einer angefügten Beziehung in Bezug auf das Kochbecken (2) angeordnet ist.

4. Vorrichtung nach Anspruch 1, **dadurch gekennzeichnet, dass** das Kochbecken (2) und das Kühlbecken (3) in einer einander überlappenden Beziehung angeordnet sind.

5. Vorrichtung nach Anspruch 1, **dadurch gekennzeichnet, dass** die Antriebsmittel (11, 12, 13, 14) Antriebsketten (11) umfassen, welche in einer Endlosweise mitgezogen werden und eine Mehrzahl von Schubelementen (13) aufweisen, die mit einer voreingestellten Teilung zueinander angeordnet sind.

6. Vorrichtung nach Anspruch 1, **dadurch gekennzeichnet, dass** die Vorrichtung des Weiteren Walzentrageelemente (14) zum Tragen der Rahmen in den Becken (2, 3) umfasst.

7. Vorrichtung nach Anspruch 1, **dadurch gekennzeichnet, dass** die Pump- und thermischen Verarbeitungsaufbauten (20) auf einer Seite von jedem Becken (2, 3) angeordnet sind.

8. Vorrichtung nach Anspruch 1, **dadurch gekennzeichnet, dass** jedes Becken zwei separate und unabhängig angetriebene Bahnen umfasst.

## Revendications

1. Appareil (1) pour la cuisson et le refroidissement continus dans l'eau de produits alimentaires à base de viande contenus de façon amovible dans des moules de cuisson, ledit appareil comprenant une cuve de cuisson (2) et une cuve de refroidissement (3), ladite cuve de cuisson (2) et ladite cuve de refroidissement (3) étant séparées l'une de l'autre tout en étant reliées fonctionnellement l'une à l'autre, lesdites cuves (2, 3) comprenant des moyens d'entraînement (11, 12, 13, 14) pour le transfert continu d'une pluralité de cadres supportant une pluralité desdits produits alimentaires respectivement reçus de façon amovible dans un moule respectif, ledit appareil comprenant en outre des ensembles de pompage et de traitement thermique (20) destinés à pomper et à traiter thermiquement un grand volume d'eau en circulation circulant en flux transversaux substantiellement perpendiculaires auxdits moules de produits alimentaires, et un pont roulant (30) agencé au niveau de parties d'extrémité de chargement et de déchargement de la cuve de cuisson (2) et de la cuve de refroidissement (3) sur une structure de support en acier (31) agencée sur un côté desdites cuves (2, 3), un robot portique étant entraîné sur celle-ci.

2. Appareil selon la revendication 1, **caractérisé en ce que** ladite cuve de refroidissement (3) est agencée dans une relation en cascade par rapport à la cuve de cuisson (2).

3. Appareil selon la revendication 1, **caractérisé en ce que** ladite cuve de refroidissement (3) est agencée dans une relation juxtaposée par rapport à la cuve de cuisson (2).

4. Appareil selon la revendication 1, **caractérisé en ce que** ladite cuve de cuisson (2) et ladite cuve de refroidissement (3) sont agencés dans une relation mutuellement superposée.

5. Appareil selon la revendication 1, **caractérisé en ce que** lesdits moyens d'entraînement (11, 12, 13, 14) comprennent des chaînes d'entraînement (11) entraînées de façon continue et comprenant une pluralité d'éléments de poussée (13) agencés avec un pas préréglé les uns par rapport aux autres.

6. Appareil selon la revendication 1, **caractérisé en ce que** ledit appareil comprend en outre des éléments de support à roulettes (14) destinés à supporter lesdits cadres à l'intérieur desdites cuves (2, 3).

7. Appareil selon la revendication 1, **caractérisé en ce que** lesdits ensembles de pompage et de traitement thermique (20) sont agencés sur un côté de chacun desdites cuves (2, 3).

8. Appareil selon la revendication 1, **caractérisé en ce que** chacune desdites cuves comprend deux voies discrètes et entrées séparément.
